# EUROPEAN PATENT APPLICATION

(11) **EP 4 546 333 A1**
(43) Date of publication of application: **30.04.2025**
(21) Application number: 23827216.5
(22) Date of filing: 21.06.2023
(51) Int. Cl.: G10H 1/34, G06F 3/0346, G06F 3/038, G10H 1/00

(54) **CONTROLLER, MUSICAL SOUND GENERATION SYSTEM, METHOD, PROGRAM, AND STORAGE MEDIUM**

(30) Priority: 23.06.2022 JP 2022101416
(71) Applicant: DENTSU INC., Tokyo 105-7001 (JP)
(72) Inventor: TANAKA Naoki, Tokyo 105-7001 (JP); MURAKAMI Shintaro, Tokyo 105-7001 (JP); KUKI Keita, Tokyo 105-7001 (JP); AI Kohei, Tokyo 105-7001 (JP)
(74) Representative: Bardehle Pagenberg Partnerschaft mbB Patentanwälte Rechtsanwälte
(86) International application number: PCT/JP2023/022852
(87) International publication number: WO 2023/249033

(57) **Abstract**

A controller that controls a musical sound generation device has an acquisition unit that acquires gaze information of a user, a display control unit that dynamically displays a plurality of operating portions associated with control commands for the musical sound generation device on a display unit, and displays a pointer for selecting an operating portion on the display unit on the basis of the gaze information acquired by the acquisition unit, a determination unit that determines selection of an operating portion overlapping at least a part of the pointer among the plurality of operating portions, and a communication unit that transmits, to the musical sound generation device, information conforming to a MIDI standard corresponding to the operating portion of which selection has been determined by the determination unit.

## Description

### Technical Field

The present invention relates to a controller, a musical sound generation system, a method, a program, and a storage medium.

### Background Art

Conventionally, there is a performance interface that generates performance control information for controlling a musical sound generated from a musical sound generation device according to a physical condition of an operating portion (see Patent Literature 1).

### Citation List

### Patent Literature

Patent Literature 1: JP 2001-195059 A

### Summary of Invention

### Technical Problem

However, there has been no proposal for use by a user with limited movement of the body such as an ALS patient.

A problem to be solved by the present invention is to enable a user with limited movement of the body to easily control a musical sound generation device.

### Solution to Problem

A controller related to a first aspect is a controller that controls a musical sound generation device, the controller having an acquisition unit that acquires gaze information of a user; a display control unit that dynamically displays a plurality of operating portions associated with control commands for a musical sound generation device on a display unit, and displays a pointer for selecting an operating portion on the display unit on the basis of the gaze information acquired by the acquisition unit; a determination unit that determines selection of an operating portion overlapping at least a part of the pointer among the plurality of operating portions; and a communication unit that transmits, to the musical sound generation device, information conforming to a MIDI standard corresponding to the operating portion of which selection has been determined by the determination unit.

According to this configuration, a user with limited movement of the body can easily control the musical sound generation device.

According to a controller related to a second aspect, in the controller related to the first aspect, the display control unit displays a video of a three-dimensional space on the display unit, and displays the plurality of operating portions on the display unit to move in the three-dimensional space.

According to this configuration, the user can control the musical sound generation device in accordance with the movement of the operating portion moving in the three-dimensional space.

According to a controller related to a third aspect, in the controller related to the second aspect, the display control unit displays at least one operating portion of the plurality of operating portions on the display unit to move from a back side to a front side of the three-dimensional space.

According to this configuration, the user can control the musical sound generation device while obtaining a sense of immersion in accordance with the movement of the operating portion moving from the back side to the front side of the three-dimensional space.

According to a controller related to a fourth aspect, in the controller related to the first to third aspects, the display control unit displays an indicator indicating elapse of a predetermined time corresponding to one bar of music played by the musical sound generation device in the vicinity of the pointer.

According to this configuration, the user can control the musical sound generation device in timing with the elapse of the predetermined time indicated by the indicator.

According to a controller related to a fifth aspect, in the controller related to the fourth aspect, the indicator includes a circular meter graph that dynamically changes in accordance with the elapse of the predetermined time.

According to this configuration, the user can visually and easily recognize the elapse of the predetermined time.

According to a controller related to a sixth aspect, in the controller related to the fourth or fifth aspect, the indicator includes a timer that counts down or counts up the predetermined time.

According to this configuration, the user can easily control the musical sound generation device in timing with the elapse of the predetermined time.

According to a controller related to a seventh aspect, in the controller related to the sixth aspect, the timer counts down or counts up the predetermined time by one beat.

According to this configuration, the user can control the musical sound generation device in accordance with the rhythm of the music.

According to a controller related to an eighth aspect, in the controller related to the fourth to seventh aspects, the determination unit determines selection of an operating portion overlapping at least a part of the pointer when the predetermined time elapses.

According to this configuration, since the selection of the operating portion is automatically determined when the predetermined time elapses, it is easy to control the musical sound generation device in accordance with the rhythm of the music.

According to a controller related to a ninth aspect, in the controller related to any one of the first to eighth aspects, the determination unit determines selection of an operating portion overlapping with a reference position of the pointer.

According to this configuration, it is possible to more accurately select the operating portion.

According to a controller related to a tenth aspect, in the controller related to the ninth aspect, the reference position is substantially a center of the pointer.

According to this configuration, it is possible to more easily select the operating portion.

According to a controller related to an eleventh aspect, in the controller related to any one of the first to tenth aspects, the determination unit determines selection of the operating portion without a user operation other than the gaze information of the user.

According to this configuration, since the operating portion can be selected on the basis of only the user's gaze information (gaze input), even a user with limited physical freedom can easily control the musical sound generation device.

A musical sound generation system related to a twelfth aspect is a musical sound generation system having a musical sound generation device and a controller that controls the musical sound generation device, the musical sound generation system including an acquisition unit that acquires gaze information of a user; a display control unit that dynamically displays a plurality of operating portions associated with control commands for the musical sound generation device on a display unit, and displays a pointer for selecting an operating portion on the display unit on the basis of the gaze information acquired by the acquisition unit; a determination unit that determines selection of an operating portion overlapping at least a part of the pointer among the plurality of operating portions; and a communication unit that transmits, to the musical sound generation device, information conforming to a MIDI standard corresponding to the operating portion of which selection has been determined by the determination unit.

A method related to a thirteenth aspect is a method of controlling a musical sound generation device, the method having a step of acquiring gaze information of a user; a step of dynamically displaying a plurality of operating portions associated with control commands for the musical sound generation device on a display unit, and displaying a pointer for selecting an operating portion on the display unit on the basis of the gaze information; a step of determining selection of an operating portion overlapping at least a part of the pointer among the plurality of operating portions; and a step of transmitting, to the musical sound generation device, information conforming to a MIDI standard corresponding to the determined operating portion.

According to this configuration, a user with limited movement of the body can easily control the musical sound generation device.

A program related to a fourteenth aspect is a program for causing a computer to execute a method for controlling a musical sound generation device, the method having a step of dynamically displaying a plurality of operating portions associated with control commands for the musical sound generation device on a display unit, and displaying a pointer for selecting an operating portion on the display unit on the basis of gaze information of a user; a step of determining selection of an operating portion overlapping at least a part of the pointer among the plurality of operating portions; and a state of transmitting, to the musical sound generation device, information conforming to a MIDI standard corresponding to the determined operating portion.

A storage medium related to a fifteenth aspect is a computer-readable storage medium storing the program related to the fourteenth aspect.

### Brief Description of Drawings

Fig. 1 is a diagram illustrating an example of a system configuration of a musical sound generation system 1 according to the present embodiment.
Fig. 2 is a block diagram illustrating an example of a hardware configuration of the musical sound generation system 1 according to the present embodiment.
Fig. 3 is a block diagram illustrating an example of a functional configuration of the musical sound generation system 1 according to the present embodiment.
Fig. 4 is a flowchart illustrating an example of an operation of the musical sound generation system 1 according to the present embodiment.
Fig. 5A is a diagram illustrating a display example of a dynamically changing user interface of a controller 2 according to the present embodiment.
Fig. 5B is a diagram illustrating a display example of a dynamically changing user interface of the controller 2 according to the present embodiment, and is a diagram illustrating a display example changed after Fig. 5A.
Fig. 5C is a view illustrating a display example of a dynamically changing user interface of the controller 2 according to the present embodiment, and is a diagram illustrating a display example changed after Fig. 5B.
Fig. 5D is a diagram illustrating a display example of a dynamically changing user interface of the controller 2 according to the present embodiment, and is a diagram illustrating a display example changed after Fig. 5C.
Fig. 6 is a diagram illustrating an example of a plurality of operating portions displayed on the user interface of the controller 2 according to the present embodiment.
Fig. 7 is an enlarged view of a pointer of the user interface illustrated in Fig. 5A.

### Description of Embodiments

Hereinafter, embodiments of the present invention will be described in detail with reference to the accompanying drawings. Note that, in the respective drawings, constituents having equivalent functions are denoted by the same reference numerals, and detailed description of the constituents having the same reference numerals will not be repeated.

### (Configuration of musical sound generation system)

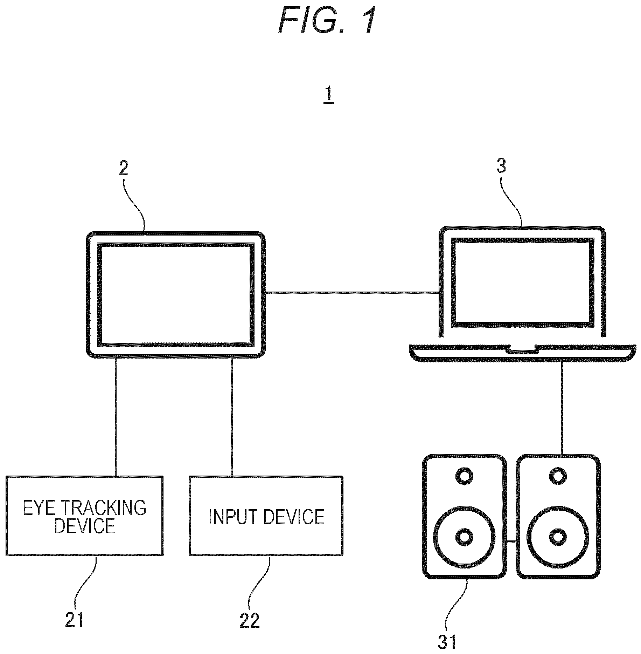

Fig. 1 is a diagram illustrating a schematic configuration of a musical sound generation system 1 according to an embodiment. As illustrated in Fig. 1, the musical sound generation system 1 according to the present embodiment includes a controller 2 and a musical sound generation device 3. The controller 2 and the musical sound generation device 3 are communicatively connected via a communication interface (I/F) that will be described later.

The controller 2 is a device for controlling the musical sound generation device 3 on the basis of a communication protocol conforming to the MIDI standard. The controller 2 is connected to an eye tracking device 21 for a user with limited movement of the body such as an ALS patient to input various types of information to the controller 2 through gaze input, and an input device 22 on which the user performs a manual operation (the controller 2 may include the eye tracking device 21 and the input device 22).

The eye tracking device 21 tracks eye movement (gaze direction) of the user and outputs gaze information to the controller 2. The gaze information can be generated, for example, by extracting a characteristic pattern of a pupil or the like from an image obtained by sequentially capturing an eyeball image of the user. The present embodiment focuses on the fact that an ALS patient can move a line of sight, and controls the musical sound generation device 3 by using gaze information.

The input device 22 is an input device that can be operated by the user, such as a manual switch or a foot switch. When the user performs an operation by using the input device 22, a signal corresponding to the operation is output from the input device 22 to the controller 2. It is desirable that the input device 22 allows a user with limited movement of the body such as an ALS patient to easily perform an input operation, and for example, the input operation is to press a switch by using the body of the user.

The musical sound generation device 3 is a device for generating a musical sound on the basis of a signal conforming to the MIDI standard received from the controller 2. For example, by installing and executing integrated music software called a digital audio workstation (DAW) in a personal computer, the personal computer can be used as a musical sound generation device. In addition, the musical sound generation device 3 includes a sound system 31 for emitting sound on the basis of an acoustic signal.

### (Hardware configuration)

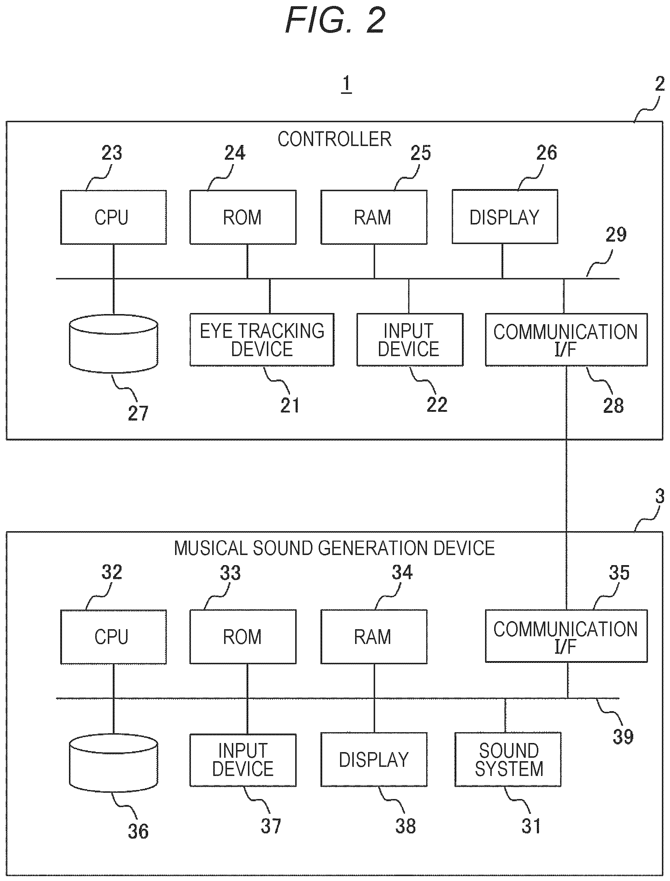

Next, a hardware configuration of the musical sound generation system 1 according to the present embodiment will be described. Fig. 2 is a block diagram illustrating an example of a hardware configuration of the musical sound generation system 1 according to the present embodiment.

In the controller 2, a CPU 23 is a processing device that controls the entire operation of the controller 2. A ROM 24 is a nonvolatile memory that stores a control program executed by the CPU 23 and various types of data. A RAM 25 is a volatile memory used for a load region and a work region of a program executed by the CPU 23. A display 26 is a display device that displays various types of information (user interface). A storage device 27 is storage means for storing various types of information, and may be built in a main body of the controller 2 or may be a device to and from which a storage medium is attachable and detachable. A communication interface (I/F) 28 is an interface for connection to the musical sound generation device 3. A bus 29 is a bus line that connects the above constituents to each other.

In the present embodiment, the musical sound generation device 3 is a device in which DAW software is installed in a PC. By executing the DAW software, various functions for music production (for example, a hard disk recording function, a function of creating and editing MIDI data and audio data, a mixing function, and a sequencer function) can be realized. Note that, in the present embodiment, an example in which the musical sound generation device 3 is configured by a PC and DAW software will be described, but a single sequencer device or the like may be used.

In the musical sound generation device 3, a CPU 32, a ROM 33, a RAM 34, a storage device 36, an input device 37 such as a mouse and a keyboard, and a display 38 are basic configurations included in a general-purpose PC. A communication I/F 35 is an interface for connection to the controller 2. Note that the communication I/Fs 28 and 35 are, for example, a wired I/F dedicated to music such as MIDI, a general-purpose wired I/F such as USB or IEEE 1394, or a general-purpose wireless I/F such as a wireless LAN or Bluetooth (registered trademark). The sound system 31 emits an analog acoustic signal passed from a codec which is a sound I/O having a digital analog (D/A) conversion function or the like. The sound system 31 is a function added in a form in which a board or a card is inserted into a slot included in a PC configuring the musical sound generation device 3. The bus 39 is a bus line that connects the above constituents to each other.

### (Functional configuration)

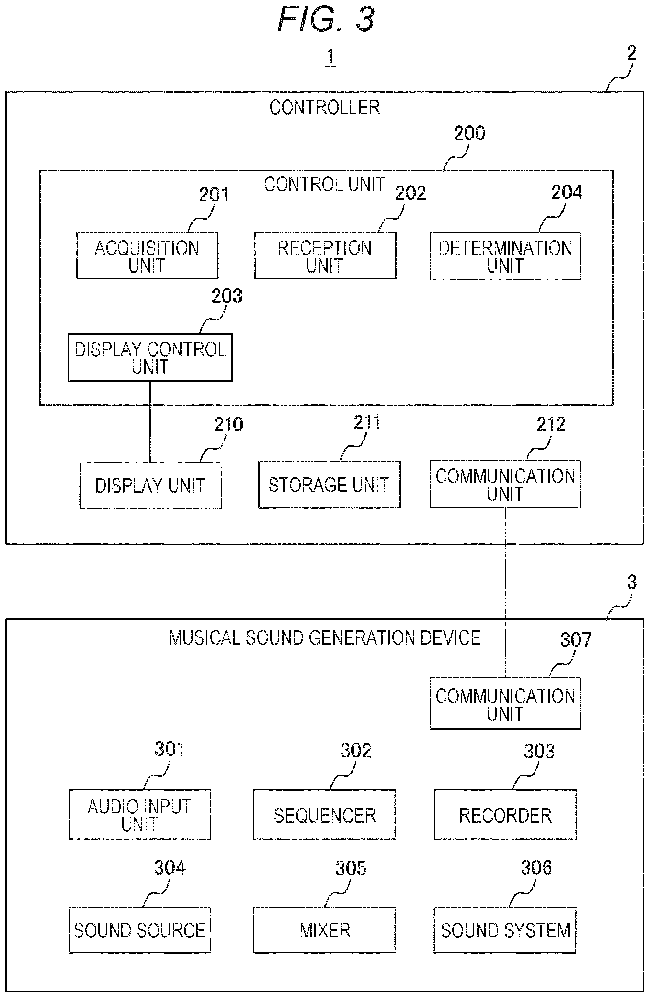

Next, a functional configuration of the musical sound generation system 1 according to the present embodiment will be described. Fig. 3 is a diagram illustrating an example of a functional configuration of the musical sound generation system 1 according to the present embodiment.

As illustrated in Fig. 3, the controller 2 has a control unit 200, a display unit 210, a storage unit 211, and a communication unit 212.

The control unit 200 has an acquisition unit 201, a reception unit 202, a determination unit 204, and a display control unit 203.

The acquisition unit 201 acquires gaze information of a user of the controller 2. Specifically, the acquisition unit 201 acquires information regarding a gaze direction (gaze information) of the user output from the eye tracking device 21.

The reception unit 202 receives an input operation of the user using the input device 22(a manual switch, a foot switch, or the like).

The display control unit 203 dynamically displays a plurality of operating portions (icons) associated with control commands for the musical sound generation device 3 on the display unit 210 (corresponding to the display 26 in Fig. 2) together with various types of information. In addition, the display control unit 203 displays a pointer for operating an operating portion on the display unit 210 on the basis of the gaze information of the user acquired by the acquisition unit 201.

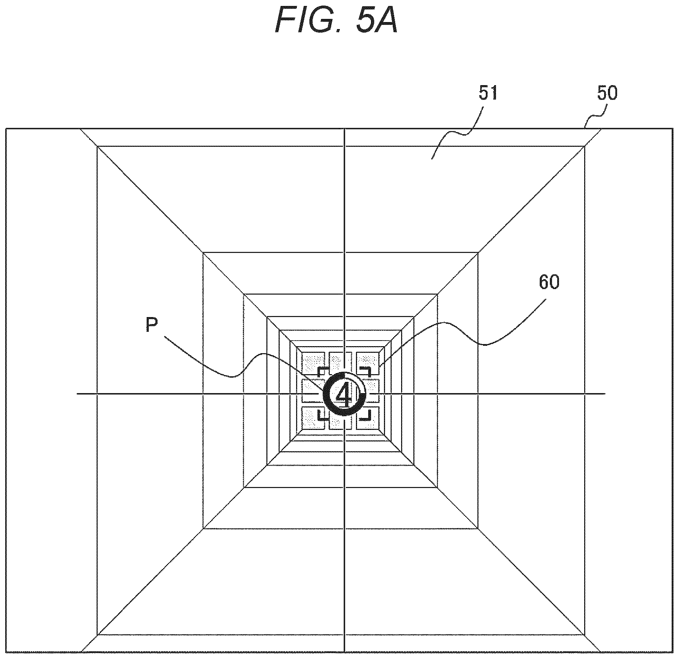

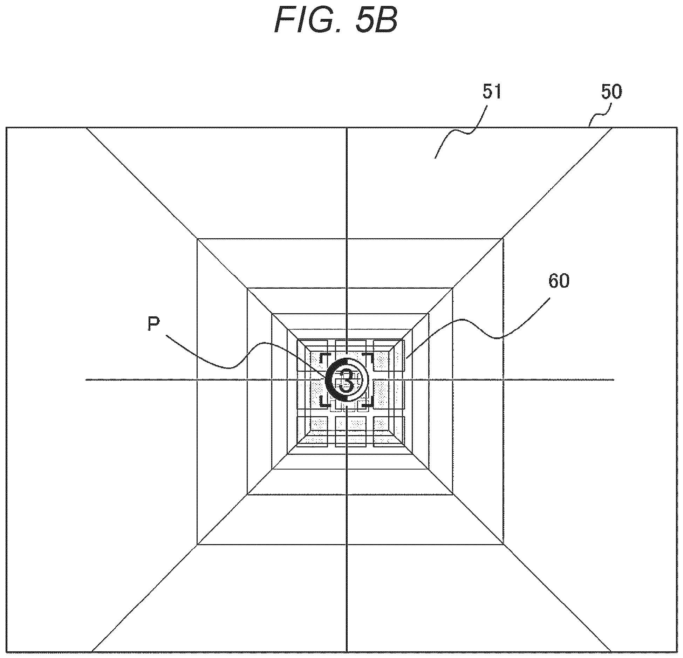

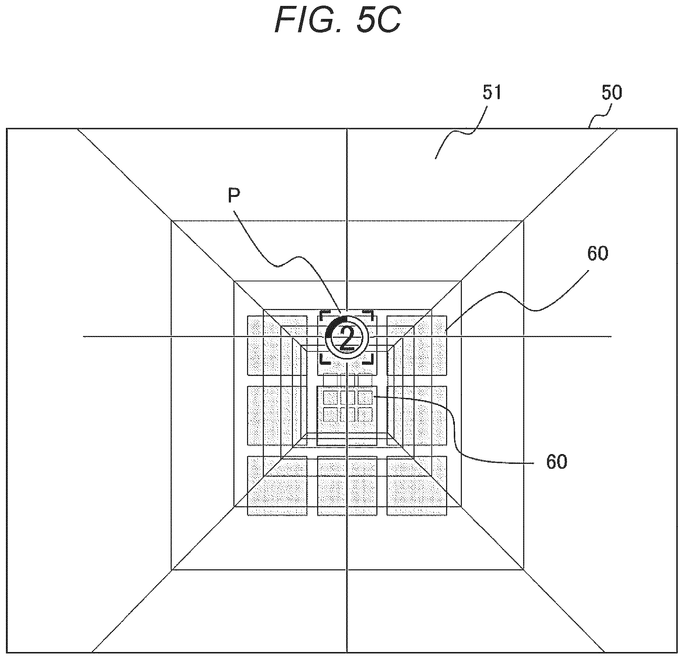

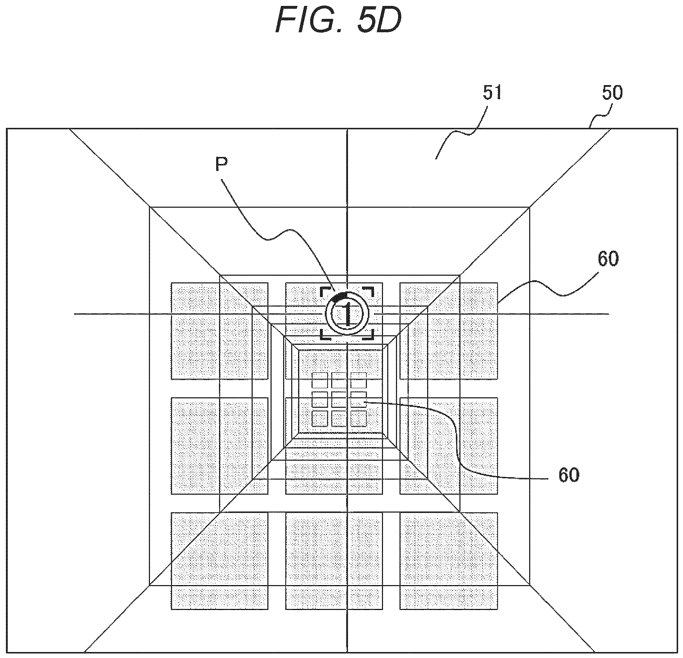

Figs. 5A to 5D are diagrams illustrating examples of the user interface 50 dynamically displayed on the display unit 210 by the display control unit 203. The display control unit 203 changes display of the user interface 50 in the order of Figs. 5A, 5B, 5C, and 5D with the elapse of time.

As illustrated in Figs. 5A to 5D, the display control unit 203 displays a video of a three-dimensional space 51 on the display unit 210 as the user interface 50. The display control unit 203 displays a plurality of operating portions 60 to move from a back side to a front side of the three-dimensional space 51. The plurality of operating portions 60 disappear when moving to the foremost side of the three-dimensional space, and in parallel with this, a plurality of new operating portions 60 are generated on the screen and displayed to move from the back side to the front side of the screen. By displaying the user interface 50 as described above, the user feels as if a plurality of operating portions 60 approach the user from the back side of the screen of the display unit 210 or as if the user advances in the depth direction in the three-dimensional space 51. As a result, the user can operate the controller 2 with a sense of immersion.

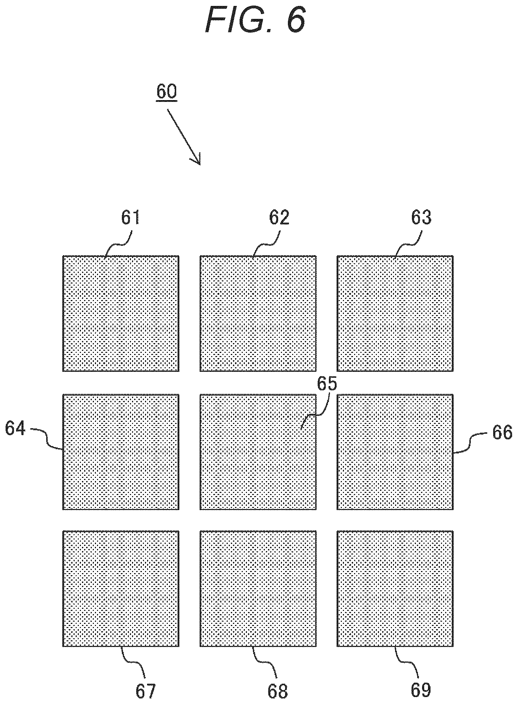

Fig. 6 is a diagram illustrating an example of the plurality of operating portions 60 displayed on the user interface 50. As illustrated in Fig. 6, the plurality of operating portions 60 include nine rectangular operating portions such as operating portions 61 to 69. Each of the operating portions 61 to 69 is associated with a corresponding control command for the musical sound generation device 3 (DAW), and when the user operates (selects) each of the operating portions 61 to 69, the musical sound generation device 3 performs processing according to a corresponding control command.

Returning to Figs. 5A to 5D, the user interface 50 includes a pointer P for operating/selecting each operating portion described above. The pointer P is displayed on the display unit 210 on the basis of the gaze information acquired by the acquisition unit 201. Specifically, a position of a gaze point on the screen of the display unit 210 is obtained from the gaze information, and the pointer P is displayed at the position.

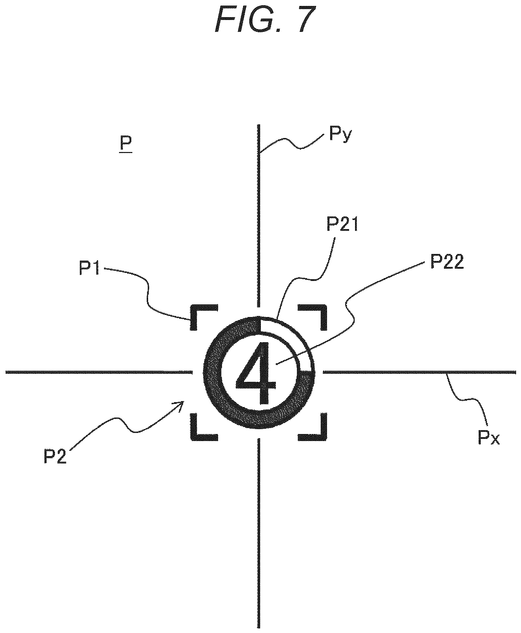

Fig. 7 is an enlarged view of the pointer P displayed on the user interface 50 illustrated in Figs. 5A to 5D. As illustrated in Fig. 7, the pointer P includes a reference line Px in the horizontal direction and a reference line Py in the vertical direction, and an intersection of the reference line Px and the reference line Py is a reference position. This reference position is disposed at the position of the user's gaze point obtained from the gaze information. The pointer P includes a rectangular region P1 and an indicator P2 displayed in the rectangular region. The rectangular region P1 is a region that is determined to be superimposed on an operating portion by the determination unit 204 that will be described later. The indicator P2 is an index indicating the elapse of a predetermined time corresponding to one bar of the music played by the musical sound generation device 3. The indicator P2 includes a circular meter graph P21 that dynamically changes in accordance with the elapse of a predetermined time, and a timer P22 that counts down the predetermined time. For example, in the case of music in 4/4 time, since one bar includes four beats, the timer P22 counts down by one beat in the order of 4, 3, 2, and 1. Note that the timer P22 may count up instead of the countdown, or the countdown or the countup does not need to be performed by one beat. For example, the timer P22 may count down or up by 1 second. As described above, the pointer P has the indicator P2 indicating the elapse of the predetermined time corresponding to one bar of the music played by the musical sound generation device 3, and thus the user of the controller 2 can easily control the musical sound generation device 3 in accordance with the rhythm of the music.

Returning to Fig. 3, the determination unit 204 determines selection of an operating portion overlapping at least a part of the rectangular region P1 of the pointer P among the plurality of operating portions at a timing at which the count of the timer expires (when a predetermined time elapses). Consequently, the selection of the operating portion can be determined according to the rhythm of the music on the basis of only the gaze input using the eye tracking device 21. Furthermore, the determination unit 204 may determine selection of an operating portion overlapping the reference position of the pointer P. As a result, in a case where the operating portions are disposed adjacent to each other, it is possible to reduce an erroneous operation (erroneous selection) of the operating portion. Such a selection method is also useful for a user who has difficulty in an operation other than moving a line of sight since an operating portion can be selected by using only the gaze information.

In addition, the determination unit 204 may determine selection of an operating portion according to a user's input operation using the input device 22, received by the reception unit 202. That is, the user can select the operating portion through the gaze input using the eye tracking device 21 and determine the selection of the operating portion using the input device 22(a manual switch, a foot switch, or the like). As described above, the user can operate the controller 2 while feeling the rhythm of the music played by the musical sound generation device **3.** Such a selection method is useful for a user who can operate the input device 22 with a part of the body such as a hand or a foot in addition to moving a line of sight.

The storage unit 211 stores information regarding each control command for the musical sound generation device 3 (DAW) associated with a corresponding operating portion.

The communication unit 212 transmits, to the musical sound generation device 3, information (control command information or MIDI event information) conforming to the MIDI standard corresponding to the operating portion of which the selection has been determined by the determination unit 204.

Next, a functional configuration of the musical sound generation device 3 will be described. As illustrated in Fig. 3, the musical sound generation device 3 has an audio input unit 301, a sequencer 302, a recorder 303, a sound source 304, a mixer 305, a sound system 306, and a communication unit 307.

The audio input unit 301 inputs an analog acoustic signal converted into a digital acoustic signal or inputs a digital acoustic signal itself.

The sequencer 302 records the MIDI event information received by the communication unit 307. The MIDI event information is supplied to the sound source 304 that will be described later.

The sound source 304 is a software sound source. The sound source 304 generates an audio signal in response to the input MIDI event information. The audio signal output from the sound source 304 is input to the recorder 303 and the mixer 305.

The recorder 303 records the audio signal input by the audio input unit 301 or the audio signal output from the sound source 304. The audio signal recorded in the recorder 303 is output to the mixer 305 in response to a reproduction instruction.

The mixer 305 supplies the audio signal output from the sound source 304 or the recorder 303 to the sound system 306.

### (Example of operation)

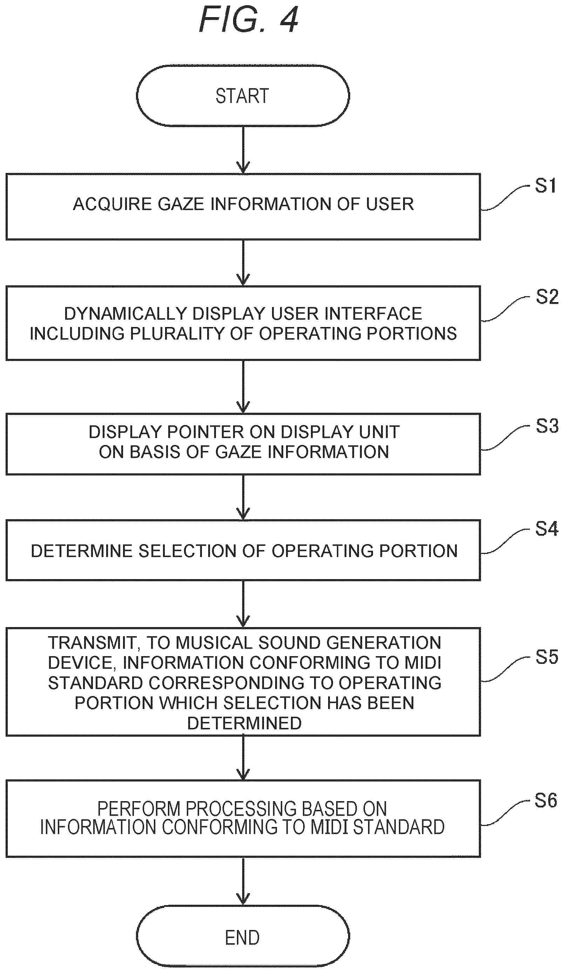

Next, an example of an operation of the musical sound generation system 1 will be described. Fig. 4 is a flowchart illustrating an example of an operation of the musical sound generation system 1.

First, in the controller 2, the acquisition unit 201 of the control unit 200 acquires gaze information of a user output from the eye tracking device 21 (step S1). The gaze information may be acquired at any timing, and is always acquired in real time, for example.

Next, the display control unit 203 of the control unit 200 dynamically displays a plurality of operating portions associated with control commands for the musical sound generation device 3 (DAW) on the display unit 210 (step S2) .

In addition, the display control unit 203 of the control unit 200 displays a pointer for operating an operating portion on the display unit 210 on the basis of the gaze information acquired by the acquisition unit 201 (step S3).

Next, the determination unit 204 of the control unit 200 determines selection of an operating portion overlapping at least a part of the pointer among the plurality of operating portions (step S4).

Subsequently, the communication unit 307 transmits information conforming to the MIDI standard corresponding to the operating portion of which the selection has been determined by the determination unit 204 to the musical sound generation device 3 (step S5).

The musical sound generation device 3 performs various processing (execution of control commands, recording of MIDI events, and the like) on the basis of the information conforming to the MIDI standard received from the controller 2 (step S6).

As described above, according to the present embodiment, the musical sound generation system 1 has the acquisition unit 201 that acquires gaze information of a user, the display control unit 203 that dynamically displays a plurality of operating portions associated with control commands for the musical sound generation device on the display unit 210 and displays the pointer P for operating an operating portion on the display unit 210 on the basis of the gaze information acquired by the acquisition unit 201, the determination unit 204 that determines selection of an operating portion overlapping at least a part of the pointer P among the plurality of operating portions, and the communication unit 212 that transmits, to the musical sound generation device 3, information conforming to the MIDI standard corresponding to the operating portion of which the selection has been determined by the determination unit 204. Therefore, a user with limited movement of the body can easily control the musical sound generation device **3.** Some or all of the functional units described in the present specification may be realized by a program. The program referred to in the present specification may be distributed by being non-temporarily recorded in a computer-readable recording medium, may be distributed via a communication line (including wireless communication) such as the Internet, or may be distributed in a state of being installed in any terminal.

On the basis of the above description, a person skilled in the art may be able to conceive of additional effects and various modifications of the present invention, but aspects of the present invention are not limited to the individual embodiments described above. Various additions, modifications, and partial deletions can be made without departing from the conceptual idea and spirit of the present invention derived from the contents defined in the claims and equivalents thereof.

For example, a device described as a single device (alternatively, a member; the same applies hereinafter) (including a device depicted in the drawings as a single device) in the present specification may be implemented by a plurality of devices. Conversely, devices described as a plurality of devices (including devices depicted in the drawings as a plurality of devices) in the present specification may be implemented by one device. Alternatively, some or all of means or functions assumed to be included in a certain device (for example, a server) may be included in another device (for example, a user terminal).

In addition, all the matters described in the present specification are not essential requirements. In particular, matters described in the present specification and not described in the claims can be regarded as any additional matters.

It should be noted that the applicant of the present invention is merely aware of the invention disclosed in the document in the section of "Citation List" in the present specification, and the present invention is not necessarily intended to solve the problem in the invention disclosed in the document. The problem to be solved by the present invention should be recognized in consideration of the entire specification. For example, in the present specification, in a case where there is a description that a predetermined effect is exhibited by a specific configuration, it can be said that the problem of reversing the predetermined effect is solved. However, such a specific configuration is not necessarily an essential requirement.

## Claims

1. A controller that controls a musical sound generation device, the controller comprising:
an acquisition unit configured to acquire gaze information of a user;
a display control unit configured to dynamically display a plurality of operating portions associated with control commands for a musical sound generation device on a display unit, and displays a pointer for selecting an operating portion on the display unit on the basis of the gaze information acquired by the acquisition unit;
a determination unit configured to determine selection of an operating portion overlapping at least a part of the pointer among the plurality of operating portions; and
a communication unit configured to transmit, to the musical sound generation device, information conforming to a MIDI standard corresponding to the operating portion of which selection has been determined by the determination unit.

2. The controller according to claim 1, wherein the display control unit displays a video of a three-dimensional space on the display unit, and displays the plurality of operating portions on the display unit to move in the three-dimensional space.

3. The controller according to claim 2, wherein the display control unit displays at least one operating portion of the plurality of operating portions on the display unit to move from a back side to a front side of the three-dimensional space.

4. The controller according to claim 1, wherein the display control unit displays an indicator indicating elapse of a predetermined time corresponding to one bar of music played by the musical sound generation device in a vicinity of the pointer.

5. The controller according to claim 4, wherein the indicator includes a circular meter graph that dynamically changes in accordance with the elapse of the predetermined time.

6. The controller according to claim 4, wherein the indicator includes a timer that counts down or counts up the predetermined time.

7. The controller according to claim 6, wherein the timer counts down or counts up the predetermined time by one beat.

8. The controller according to any one of claims 4 to 7, wherein the determination unit determines selection of an operating portion overlapping at least a part of the pointer when the predetermined time elapses.

9. The controller according to claim 1, wherein the determination unit determines selection of an operating portion overlapping with a reference position of the pointer.

10. The controller according to claim 9, wherein the reference position is substantially a center of the pointer.

11. The controller according to claim 1, wherein the determination unit determines selection of the operating portion without a user operation other than the gaze information of the user.

12. A musical sound generation system including a musical sound generation device and a controller that controls the musical sound generation device, the musical sound generation system comprising:
an acquisition unit that acquires gaze information of a user;
a display control unit that dynamically displays a plurality of operating portions associated with control commands for the musical sound generation device on a display unit, and displays a pointer for selecting an operating portion on the display unit on the basis of the gaze information acquired by the acquisition unit;
a determination unit that determines selection of an operating portion overlapping at least a part of the pointer among the plurality of operating portions; and
a communication unit that transmits, to the musical sound generation device, information conforming to a MIDI standard corresponding to the operating portion of which selection has been determined by the determination unit.

13. A method of controlling a musical sound generation device, the method comprising:
a step of acquiring gaze information of a user;
a step of dynamically displaying a plurality of operating portions associated with control commands for the musical sound generation device on a display unit, and displaying a pointer for selecting an operating portion on the display unit on the basis of the gaze information;
a step of determining selection of an operating portion overlapping at least a part of the pointer among the plurality of operating portions; and
a step of transmitting, to the musical sound generation device, information conforming to a MIDI standard corresponding to the determined operating portion.

14. A program for causing a computer to execute a method of controlling a musical sound generation device, the method comprising:
a step of dynamically displaying a plurality of operating portions associated with control commands for the musical sound generation device on a display unit, and displaying a pointer for selecting an operating portion on the display unit on the basis of gaze information of a user;
a step of determining selection of an operating portion overlapping at least a part of the pointer among the plurality of operating portions; and
a step of transmitting, to the musical sound generation device, information conforming to a MIDI standard corresponding to the determined operating portion.

15. A computer-readable storage medium storing the program according to claim 14.
